**Europäisches Patentamt**

**European Patent Office**

**Office européen des brevets**

(19)

(11) Veröffentlichungsnummer : **0 414 737 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **B60J 7/00**

(21) Anmeldenummer : **89905076.9**

(22) Anmeldetag : **28.04.89**

(86) Internationale Anmeldenummer :
**PCT/EP89/00474**

(87) Internationale Veröffentlichungsnummer :
**WO 89/11404 30.11.89 Gazette 89/28**

(54) SCHIEBEDACH.

(30) Priorität : **20.05.88 DE 3817258**

(43) Veröffentlichungstag der Anmeldung :
**06.03.91 Patentblatt 91/10**

(45) Bekanntmachung des Hinweises auf die
Patenterteilung :
**21.10.92 Patentblatt 92/43**

(84) Benannte Vertragsstaaten :
**DE FR GB IT**

(56) Entgegenhaltungen :
**DE-A- 3 100 743**
**US-A- 4 671 564**
**Patent Abstracts of Japan, Band 9, Nr. 117**
**(M-381)(1840), 22. Mai 1985**

(73) Patentinhaber : **AUDI AG**
**Auto-Union-Strasse 1 Postfach 220**
**W-8070 Ingolstadt (DE)**

(72) Erfinder : **FEUCHT, Klaus, Jürgen**
**Jurastr. 17**
**W-8071 Oberdolling (DE)**

(74) Vertreter : **Engelhardt, Harald**
**Audi AG Postfach 2 20**
**W-8070 Ingolstadt (DE)**

## Beschreibung

Die vorliegende Erfindung betrifft ein Schiebedach für Personenkraftwagen mit einem Himmelrahmen, der beim Zurückschieben des Schiebedaches keine Anhebung nach oben hin benötigt (siehe z.B. die DE-A-3 100 743).

Die Fahrgastzelle von Personenkraftwagen weist im Bereich des Daches in der Regel auf der Innenseite eine Stoffbespannung auf, die mit "Himmel" bezeichnet wird. Falls ein mit einem derartigen Himmel versehener Personenkraftwagen mit einem Schiebedach versehen ist, muß der betreffende Himmel mit einer entsprechenden Öffnung versehen sein, die im geschlossenen Zustand des Schiebedaches durch einen entsprechenden flächigen Himmelrahmen verschlossen wird.

Bei den meisten Personenkraftwagen mit Schiebedach liegt dieser flächige Himmelrahmen entlang seiner Ränder auf der Oberseite des Himmels auf, wodurch ein ästhetisch nicht sehr zufriedenstellender Versatz zwischen der unteren Fläche des Himmels und der unteren Fläche des Himmelrahmens entsteht, der in der Praxis im Bereich zwischen 10 und 15 mm liegt.

Um das Auftreten eines derartigen, ästhetisch nicht ganz zufriedenstellenden Versatzes zu vermeiden, ist es somit bereits bekannt, den Himmelrahmen mit nach oben gezogenen Randleisten zu versehen, so daß im geschlossenen Zustand des Schiebedaches die untere Fläche des Himmelrahmens flächig gegenüber der unteren Fläche des Himmels ausgerichtet ist. Eine derartige Anordnung hat jedoch den Nachteil, daß der Himmelrahmen zuerst angehoben werden muß, bevor das Schiebedach zusammen mit dem Himmelrahmen zurückgeschoben werden kann, zu welchem Zweck ein relativ aufwendiger Hebemechanismus für den Himmelrahmen vorgesehen werden muß.

Es ist Aufgabe der vorliegenden Erfindung, ein Schiebedach für Personenkraftwagen zu schaffen, bei dem zumindest die unmittelbar im Sichtbereich des Fahrers und des Beifahrers befindlichen Ränder des Himmelrahmens im geschlossenen Zustand des Schiebedaches fluchtend gegenüber den daran angrenzenden Bereichen des Himmels ausgerichtet sind, ohne daß dabei für den Aufschiebevorgang des Schiebedaches ein aufwendiger Hebemechanismus für den Himmelrahmen vorgesehen werden muß.

Erfindungsgemäß wird dies dadurch erreicht, daß der Himmelrahmen entlang seiner vorderen und seitlichen Kanten nach oben gezogene Randleisten aufweist, die im geschlossenen Zustand des Schiebedaches eine fluchtende Ausrichtung des Himmelrahmens gegenüber dem Fahrzeughimmel ergeben, während die rückwärtige Kante des Himmelrahmens im wesentlichen flach und den entsprechenden Rand des Fahrzeughimmels überlappend ausgebildet ist, demzufolge eine anhebungsfreie Zurückschiebung des Himmelrahmens zusammen mit dem Schiebedach durchführbar ist.

Der Grundgedanke der vorliegenden Erfindung besteht in der Erkenntnis, daß allein die vorderen und seitlichen Ränder des unterhalb des Schiebedaches vorgesehenen Himmelrahmens im unmittelbaren Blickbereich des Fahrers und des Beifahrers sind, so daß in diesen Bereichen die Ränder des Himmelrahmens nach oben gezogene Randleisten aufweisen, die im geschlossenen Zustand des Schiebedaches eine fluchtende Ausrichtung der unteren Fläche des Himmelrahmens gegenüber der unteren Fläche des Himmels bilden. Aufgrund der Tatsache jedoch, daß die rückwärtige Kante des Himmelrahmens, die im geschlossenen Zustand des Schiebedaches sowieso von den Vordersitzen des Personenkraftwagens nicht unmittelbar einsehbar ist, flach und überlappend in bezug auf die entsprechende Kante des Himmels ausgebildet ist, kann auf das Vorsehen eines mechanisch aufwendigen Hebemechanismus für den Himmelrahmen verzichtet werden, weil eine eventuell erforderliche Anhebung des Himmelrahmens beim Zurückschieben des Schiebedaches im wesentlichen selbsttätig erreicht wird. Im Rahmen der vorliegenden Erfindung läßt sich somit eine im wesentlichen optisch weitgehend zufriedenstellende Lösung für die Positionierung des Himmelrahmens in bezug auf den Himmel des Personenkraftwagens finden, ohne daß dabei der zur Erzielung des Öffnungsvorgangs des Schiebedaches erforderliche Mechanismus einen hohen technischen Aufwand erfordert.

Die Erfindung soll nunmehr anhand eines Ausführungsbeispiels näher erläutert und beschrieben werden, wobei auf die beigefügte Zeichnung Bezug genommen ist. Es zeigen:

Fig. 1 eine seitliche, schematische Ansicht, teilweise im Schnitt, eines Schiebedaches gemäß der Erfindung im geschlossenen Zustand; und

Fig. 2 eine seitliche Ansicht des Schiebedaches von Fig.1 im teilweise geöffneten Zustand.

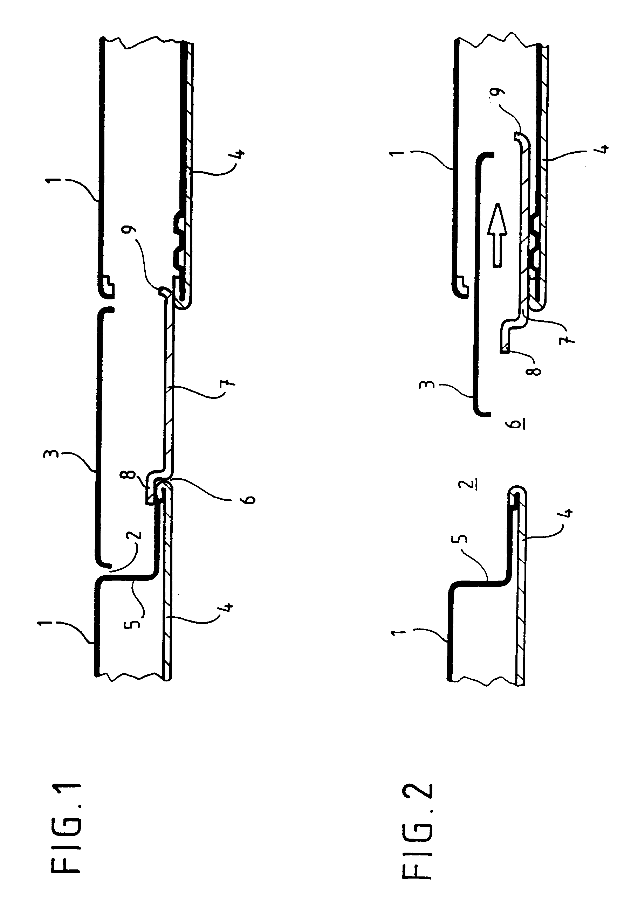

Fig. 1 zeigt die Dachkonstruktion eines Personenkraftwagens, der nach oben und außen hin mit einem Karosserieaußenblech 1 versehen ist, in das eine entsprechende Öffnung 2 eingeschnitten ist, in die ein entsprechendes Schiebedach 3 eingesetzt ist.

Unterhalb des Karosserieaußenbleches 1 ist ein Himmel 4 gespannt, der mit Hilfe eines nach unten gezogenen Randes 5 des Karosserieaußenbleches 1 gehalten ist. Der betreffende Himmel 4 ist mit einer entsprechenden Öffnung 6 versehen, in der im geschlossenen Zustand des Schiebedaches 3 ein flächig ausgebildeter Himmelrahmen 7 zu liegen gelangt.

Entlang der seitlichen Kanten und der vorderen Kante weist der Himmelrahmen 7 nach oben versetzte Randleisten 8 auf, aufgrund welcher im geschlossenen Zustand des Schiebedaches 3 der Himmel 1 im Bereich dieser Randleisten 8 flächig, d.h. ohne Versatz, in den Himmelrahmen 7 übergeht. Die hintere Kante 9 des Himmelrahmens 7 ist hingegen im wesentlichen flach ausgebildet und gelangt in überlappender Anordnung auf der nach vorne ragenden Kante des Himmels 4 im Bereich der Öffnung 6 zum Aufliegen, so daß im Bereich dieser hinteren Kante 9 ein gewisser Versatz zwischen der unteren Fläche des Himmels 4 und der unteren Fläche des Himmelrahmens 7 zustande kommt. Dieser Versatz zwischen der unteren Fläche des Himmels 4 und dem Himmelrahmen 7 im Bereich der hinteren Kante 9 erweist sich jedoch als nicht sehr störend, weil die betreffende hintere Kante 9 aus der Position des Fahrers und des Beifahrers nicht oder nur sehr schlecht wahrgenommen werden kann.

Wenn entsprechend Fig. 2 das Schiebedach 3 gegenüber dem Karosserieaußenblech 1 zurückgeschoben wird und dabei die innerhalb des Karosserieaußenbleches 1 folgende Öffnung 2 freigegeben wird, erfolgt gleichzeitig ein Zurückschieben des Himmelrahmens 7 gegenüber dem Himmel 4, wodurch die innerhalb des Himmels 4 befindliche Öffnung 6 freigegeben wird. Bei diesem Zurückschiebevorgang gleitet die untere Fläche des Himmelrahmens 7 auf dem Himmel 4, ohne daß dabei eine besondere Anhebung des Himmelrahmens 7 vorgenommen werden muß. Aus diesem Grunde vereinfacht sich die gesamte Konstruktion des Schiebedaches, weil auf einen relativ aufwendigen Hebemechanismus im Bereich des Himmelrahmens 7 verzichtet werden kann.

**Patentansprüche**

1. Schiebedach für Personenkraftwagen mit einem Himmelrahmen (7) der beim Zurückschieben des Schiebedaches (3) keine Anhebung nach oben hin benötigt, dadurch gekennzeichnet, daß der Himmelrahmen (7) entlang seiner vorderen und seitlichen Kanten nach oben gezogene Randleisten (8) aufweist, die im geschlossenen Zustand des Schiebedaches (3) eine fluchtende Ausrichtung des Himmelrahmens (7) gegenüber dem Fahrzeughimmel (4) ergeben, während die rückwärtige Kante (9) des Himmelrahmens (7) im wesentlichen flach und den entsprechenden Rand des Fahrzeughimmels (4) überlappend ausgebildet ist, demzufolge eine anhebungsfreie Zurückschiebung des Himmelrahmens (7) zusammen mit dem Schiebedach (3) durchführbar ist.

**Claims**

1. Sliding roof for motor cars, having an inside roof lining frame (7) which does not require lifting upwards when the sliding roof (3) is slid back, characterised in that the inside roof lining frame (7) comprises along its front and lateral edges edge strips (8) which extend upwards and which, in the closed state of the sliding roof (3), result in the inside roof lining frame (7) being aligned to be flush with the inside roof lining (4) of the vehicle, whereas the rear edge (9) of the inside roof lining frame (7) is made substantially flat and such as to overlap the corresponding edge of the inside roof lining (4) of the vehicle, with the result that it is possible to slide back the inside roof lining frame (7) together with the sliding roof (3) without lifting.

**Revendications**

1. Toit ouvrant pour voitures particulières, comportant un cadre d'habillage de plafond (7) qu'il n'y a pas besoin de soulever vers le haut lorsqu'on fait coulisser le toit ouvrant (3) vers l'arrière, caractérisé en ce que le cadre d'habillage de plafond (7) présente, le long de ses bords antérieur et latéraux, des rebords (8) décalés vers le haut qui donnent lieu, en position fermée du toit ouvrant (3), à un alignement du cadre d'habillage de plafond (7) par rapport au reste de l'habillage de plafond (4) de la voiture, tandis que le bord arrière (9) du cadre d'habillage de plafond (7) est réalisé sous forme pratiquement plate et de manière à recouvrir le bord correspondant de l'habillage de plafond (4) de la voiture, d'où il résulte qu'il est possible de faire coulisser vers l'arrière le cadre d'habillage de plafond (7) sans le soulever, en même temps que le toit ouvrant (3).

FIG.1

FIG.2